# EUROPÄISCHE PATENTSCHRIFT

(11) **EP 0 644 210 B1**
(45) Veröffentlichungstag und Bekanntmachung des Hinweises auf die Patenterteilung: **09.12.1998**
(21) Anmeldenummer: 94114215.0
(22) Anmeldetag: 09.09.1994
(51) Int. Cl.: C08F 212/06, C08F 220/10, C08F 220/42, C08L 25/08, C08L 33/06, C08L 33/18

(54) **Transparente und matte Formmassen aus teilchenförmigem Polymerisat und mindestens einem Thermoplast**
Transparent and matt mouldings based on particulate polymer and at least one thermoplast.
Masses de moulage mattes et transparentes constituées de particules d'un polymère et d'au moins un thermoplaste

(30) Priorität: 18.09.1993 DE 4331805
(43) Veröffentlichungstag der Anmeldung: 22.03.1995
(73) Patentinhaber: BASF Aktiengesellschaft, 67063 Ludwigshafen (DE)
(72) Erfinder: Fischer, Wolfgang, Dr., D-67067 Ludwigshafen (DE); Güntherberg, Norbert, Dr., D-67346 Speyer (DE); Mc Kee, Graham Edmund, Dr., D-69469 Weinheim (DE)

(56) Entgegenhaltungen:
- EP-A- 0 450 511
- JP-A- 2 189 359
- US-A- 4 803 252
- DATABASE WPI Derwent Publications Ltd., London, GB; AN 91-032005 & JP-A-2 300 203 (JAPAN SYNTHETIC RUBBER) 12. Dezember 1990
- DATABASE WPI Derwent Publications Ltd., London, GB; AN 90-064216 & JP-A-2 018 465 (NIPPON PAINT KK; SAIDEN KAGAKU KK) 22. Januar 1990
- DATABASE WPI Derwent Publications Ltd., London, GB; AN 84-254303 & JP-A-59 154 988 (NITTO ELECTRIC IND KK) 4. September 1984
- DATABASE WPI Derwent Publications Ltd., London, GB; AN 86-066518 & JP-A-61 019 614 (NITTO ELECTRIC IND CO) 28. Januar 1986
- DATABASE WPI Derwent Publications Ltd., London, GB; AN 90-243604 & JP-A-2 170 806 (IDEMITSU PETROCHEM KK) 2. Juli 1990
- DATABASE WPI Derwent Publications Ltd., London, GB; AN 93-251868 & JP-A-5 070 513 (ASAHI CHEM IND CO LTD) 23. März 1993

## Beschreibung

Die Erfindung betrifft eine thermoplastische Formmasse, im wesentlichen aus 1 Gew.-% bis 50 Gew.-%, bevorzugt 5 bis 40 Gew.-%, eines teilchenförmigen Polymerisates A mit einer mittleren Teilchengröße unter 1000 nm, bestehend aus
- a1:: bis zu 99,8 Gew.-% mindestens eines vinylaromatischen Monomeren a1,
- a2:: bis zu 99,8 Gew.-% mindestens eines Methacrylsäurealkylesters a2 mit 1 bis 8 Kohlenstoffatomen im Alkylrest,
- a3:: bis zu 50 Gew.-% mindestens eines polaren, copolymerisierbaren, ethylenisch ungesättigten Monomeren a3,
- a4:: 0,1 bis 10 Gew.-% mindestens eines polyfunktionellen, vernetzend wirkenden Monomeren a4,
- a5:: 0,1 bis 15 Gew.-% mindestens eines eine oder mehrere saure, basische oder Epoxy-Gruppen enthaltenden Monomeren a5,
wobei die Summe der Bestandteile a1, a2 und a3 75 Gew.-% bis 99,8 Gew.-%, bezogen auf A, beträgt und die Summe aus a1, a2, a3, a4 und a5 100 Gew.-% bezogen auf A beträgt, und 50 Gew.-% bis 99 Gew.-%, bevorzugt 60 Gew.-% bis 95 Gew.-% mindestens eines Thermoplasts mit einer Glasübergangstemperatur von mehr als 25°C, ausgewählt aus Polyvinylchlorid, Polymethylmethacrylat, Polystyrol, sowie Copolymere aus einem vinylaromatischen Monomeren und einem polaren, copolymerisierbaren, ethylenisch ungesättigten Monomeren, wobei die Differenz zwischen dem Brechungsindex des Polymerisats A und dem des Thermoplasts kleiner als 0,2 ist, sowie gegebenenfalls untergeordnete Mengen an üblichen Zusatz- und Hilfsstoffen.

Bevorzugte Ausführungsformen der Erfindung sind den Unteransprüchen zu entnehmen.

### Stand der Technik

Es gibt eine Vielzahl von Möglichkeiten, thermoplastische Formmassen mit matten Oberflächen herzustellen. In der Regel werden hierzu (eventuell mit Säuren, Basen oder Epoxiden modifizierte) Pfropfkautschuke mit (eventuell mit Säuren, Basen oder Epoxiden modifizierten) thermoplastischen Harzen gemischt.

Hierzu sind die folgenden Druckschriften in Betracht zu ziehen:
EP 450 511
DE 34 21 353
EP 139 271
DE 34 05 938
EP 312 001
DE 33 40 591

EP 450 511, DE 34 21 353 und EP 139 271 beschreiben thermoplastische Formmassen mit matten Oberflächen, bei denen Pfropfkautschuke eingesetzt werden, die Säuren und gegebenenfalls Basen enthalten. Es ist auch möglich, Pfropfkautschuke mit sauren Funktionen mit Thermoplastharzen mit basischen Funktionen zu mischen (DE 34 05 938). In EP 312 001 wird eine Mischung aus einem schlagzähmodifizierten thermoplastischen Harz, eine Epoxy-Gruppen aufweisendem Copolymer sowie einem Polymer mit Hydroxy-, N-Basen- oder Säureanhydridgruppen beschrieben. Nach DE 33 40 591 enthält eine thermoplastische Harzmasse ein mit Epoxy-Gruppen oder mit einer ungesättigten Carbonsäure modifiziertes Olefin-Polymerisat.

Es ist auch möglich, matte thermoplastische Formmassen zu erhalten, indem Pfropfkautschuke mit sehr großen Teilchendurchmessern verwendet werden. Mit den bekannten Möglichkeiten können jedoch keine matten thermoplastischen Formkörper mit hoher Transparenz erhalten werden.

In der Schrift JP-A 23 00 203 ist die Herstellung von vernetzten Mikrogelen mit einer Teilchengröße von 5 bis 50 nm durch Emulsionspolymerisation von Vinylmonomeren, die Divinyl- und Sulfonsäuregruppen enthalten, beschrieben.

Die Schrift JP-A 20 18 465 lehrt eine selbstvernetzende Emulsion eines Acrylcopolymeren aus Acrylaten, Methacrylaten, Vernetzern und ungesättigten Carbonsäuren.

In der Schrift JP-A 61 019 614 werden Harzemulsionen aus Alkylacrylat, Sulfonsäuregruppen enthaltenden Vinylmonomeren und Vernetzern offenbart.

In der Schrift JP-A 59 154 988 sind Polymerteilchen aus Glycidyl(meth)acrylat, Alkyl(meth)acrylat, polyfunktionellen Vernetzern und (Meth)acrylnitril beschrieben.

Die US-Schrift 4,803,252 lehrt ein Verfahren zur Herstellung von vernetzten Polymerteilchen aus Diacrylaten des Polyethylenglycols und polare Gruppen tragenden Comonomeren.

In der Schrift JP-A 2 189 359 werden filmbildende Polyesterformmassen beschrieben, die als Füllstoff vernetzte Polymerpartikel auf Basis von Styrol enthalten.

Die Schrift JP-A 50 70 513 beschreibt ein Verfahren zur Herstellung poröser Polymerteilchen, bei dem eine Dispersion eines partikelförmigen Polymeren mit Vinylmonomeren, Vernetzern und organischem Lösungsmittel gemischt und das Gemisch polymerisiert wird, wobei das partikelförmige Polymere ausweislich eines Beispiels aus Styrol, Methylmethacrylat, Acrylnitril und Acrylsäure aufgebaut ist.

Es wurde nun gefunden, daß durch Zugabe bestimmter vernetzter Teilchen zu thermoplastischen Harzen transparente und matte Formmassen erhalten werden, ohne daß deutliche Einbußen der mechanischen Eigenschaften des Thermoplastharzes hingenommen werden müssen.

Das durch Emulsionspolymerisation hergestellte teilchenförmige Polymerisat A hat eine mittlere Teilchengröße unter 1000 nm, bevorzugt unter 750 und besonders bevorzugt unter 500 nm, und besteht aus:
- a1:: bis zu 99,8 Gew.-%, bevorzugt bis zu 99 Gew.-% mindestens eines vinylaromatischen Monomeren al,
- a2:: bis zu 99,8 Gew.-%, bevorzugt bis zu 99 Gew.-% mindestens eines Methacrylsäurealkylesters a2 mit 1 bis 8 Kohlenstoffatomen im Alkylrest,
- a3:: bis zu 50 Gew.-%, bevorzugt bis zu 40 Gew.-% mindestens eines polaren, copolymerisierbaren, ethylenisch ungesättigten Monomeren a3,
- a4:: 0,1 bis 10 Gew.-%, bevorzugt 0,5 bis 5 Gew.-% mindestens eines polyfunktionellen, vernetzend wirkenden Monomeren a4,
- a5:: 0,1 bis 15 Gew.-%, bevorzugt 0,5 bis 10 Gew.-% mindestens eines eine oder mehrere saure, basische oder Epoxy-Gruppen enthaltenden Monomeren a5,
wobei die Summe der Bestandteile a1, a2 und a3: 75 Gew.-% bis 99,8 Gew.-%, bevorzugt 85 Gew.-% bis 99 Gew.-% und die Summe aus a1, a2, a3, a4 und a5: 100 Gew.-%, bezogen auf A beträgt.

Die thermoplastische Formmassen bestehen im wesentlichen aus 1 Gew.-% bis 50 Gew.-%, bevorzugt 5 Gew.-% bis 40 Gew.-% des teilchenförmigen Polymerisats A und 50 Gew.-% bis 99 Gew.-%, bevorzugt 60 Gew.-% bis 95 Gew.-% mindestens eines Thermoplasts mit einer Glasübergangstemperatur von mehr als 25°C, wobei die Differenz zwischen dem Brechungsindex des Polymerisats A und dem des Thermoplast kleiner als 0,2, bevorzugt kleiner als 0,02 ist, sowie gegebenenfalls untergeordnete Mengen an üblichen Zusatz- und Hilfsstoffen.

Über die teilchenförmigen Polymerisate A, ihre Bestandteile und ihre Herstellung ist im einzelnen das folgende zu sagen: Die teilchenförmigen Polymerisate werden in an sich bekannter Weise durch Emulsionspolymerisation erhalten. Beispiele für vinylaromatische Monomere a1 sind Styrol, α-Methylstyrol und kernalkylierte Styrole wie p-Methylstyrol und tert.-Butylstyrol. Bevorzugt werden Styrol, α-Methyl-styrol und p-Methylstyrol eingesetzt. Beispiele für polare, copolymerisierbare, ethylenisch ungesättigte Monomere a3 sind Acrylnitril, Methacrylnitril sowie C₁-C₁₂-Ester der Acrylsäure. Als Vernetzer eignen sich Monomere, die mindestens zwei zur Copolymerisation befähigte ethylenische Doppelbindungen enthalten, die nicht in 1,3-Stellung konjugiert sind. Beispiele sind Divinylbenzol, Diallylmaleat, Diallylfumarat, Diallylphthalat, Allylmethacrylat, Triallylcyanurat, Triallylisocyanurat, Acrylsäureester des Tricyclodecenylalkohols oder (Meth)acrylsäureester von Diolen mit bis zu 8 C-Atomen. Als saure Gruppen enthaltende Monomere a5-eignen sich Monomere mit Carbonsäure- oder Sulfonsäuregruppen. Bevorzugte Monomere sind α,β-ungesättigte Carbonsäuren wie Acrylsäure oder Methacrylsäure, ferner Citraconsäure, Crotonsäure, Fumarsäure, Itaconsäure, Maleinsäure, Vinylsulfonsäure, Vinylbenzolsulfonsäure, Vinylphosphorsäure oder Zimtsäure. Als basische Gruppen enthaltende Monomere eignen sich Monomere mit tertiären Amino-gruppen. Als Beispiele seien genannt: Dimethylaminoethyl(meth)acrylat, Morpholinmethacrylat, N-Vinylimidazol, p-Dimethylaminostyrol, N-Vinylcarbazol, N-Vinylindol, N-Vinylpyrrol, 4-Vinylpyrimidin, 2-Vinylpyridin, 3-Vinylpyridin, 4-Vinylpyridin sowie deren Gemische. Besonders bevorzugte Monomere sind Ester der Acrylsäure oder Methacrylsäure mit aliphatischen Alkoholen, die im Alkylrest eine tertiäre Aminogruppe enthalten.

Die Vernetzer a4 bewirken, daß die erhaltenen Teilchen bei der Abmischung mit dem zu mattierenden Thermoplasten als separate Teilchen erhalten bleiben. Die saure, basische Gruppen bzw. Epoxygruppen enthaltenen Monomere a5 führen, wahrscheinlich aufgrund von Unverträglichkeit mit dem zu mattierenden Thermoplasten, zur Bildung von Agglomeraten, die zu einer Oberflächenrauhigkeit und damit zu einem Matteffekt führen.

Die teilchenförmigen Polymerisate A werden zur Abmischung mit einem zu mattierenden Thermoplasten verwendet, wobei die Differenz zwischen dem Brechungsindex des teilchenförmigen Polymerisats A und dem des Thermoplasts kleiner als 0,2 bevorzugt 0,02 ist. Als Thermoplaste werden Polymere mit einer Glasübergangstemperatur von mehr als 25°C verwendet. Die Thermoplaste sind Polyvinylchlorid, Polymethylmethacrylat, Polystyrol sowie Copolymere aus einem vinylaromatischen Monomeren und einem polaren, copolymerisierbaren, ethylenisch ungesättigten Monomeren. Bevorzugte Copolymere sind Styrol-Acrylnitril- und α-Methylstyrol-Acrylnitril-Copolymere. Die Einarbeitung der erfindungsgemäßen teilchenförmigen Polymerisate kann durch gemeinsames Extrudieren, Kneten oder Walzen erfolgen.

Die erfindungsgemäßen thermoplastischen Formmassen können als weitere Bestandteile Zusatzstoffe enthalten, wie sie für thermoplastische Formmassen üblich sind. Als solche seien beispielsweise genannt: Füllstoffe, weitere verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von bis zu 30 Gew.-%, bezogen auf das Gesamtgewicht der thermcplastischen Formmasse, eingesetzt. Verträgliche Kunststoffe können auch einen höheren Anteil ausmachen.

### Beispiele

### 1. Herstellung der teilchenförmigen Polymerisats

160 g der in Tabelle 1 angegebenen Monomerengemische wurden in 1500 g Wasser unter Zusatz von 5 g des Natriumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65°C erwärmt. 10 Minuten nach dem Anspringen der Polymerisationsreaktion wurden innerhalb von 3 Stunden weitere 840 g der in Tabelle 1 angegebenen Mischung zugegeben. Nach Beendigung der Monomerzugabe wurde die Emulsion noch eine Stunde bei 65°C gehalten. Die erhaltene Dispersion wurde mittels Magnesiumsulfatlösung gefällt und das abgetrennte Polymerisat mit destilliertem Wasser gewaschen und getrocknet.

### 2. Abmischung mit Hartkomponente

Zur Herstellung der Abmischungen wurde ein Styrol/Acrylnitril-Copolymerisat mit einem Acrylnitril-Gehalt von 19 % und einer Viskositätszahl von 100 ml/g verwendet. Das gefällte und getrocknete Polymerisat aus (1) wurde auf einem Extruder bei 260°C mit dem Styrol/Acrylnitril-Copolymerisat abgemischt, so daß ein Gehalt von 10 % des Polymerisats nach (1), bezogen auf die mattierte Formmasse, resultierte. Aus diesem Gemisch wurden durch Spritzguß Formteile hergestellt.

Die mechanischen Eigenschaften der Abmischungen sowie der Glanz daraus hergestellter Formteile sind in Tabelle 2 zusammengefaßt.

### Prüfungen

| Mechanik: | | |
|---|---|---|
| Schlagzähigkeit aₙ | nach DIN 53253-n | gemessen bei Raumtemperatur |
| E-Modul | nach DIN 53457-3 | |

| Optik: | |
|---|---|
| Transparenz | nach DIN 5036 (gemessen an Rundscheiben 80 mm x 6 mm) |

**Tabelle 1:**

| Zusammensetzung der Monomergemische | | | | |
|---|---|---|---|---|
| Nr. | Styrol | Acrylnitril | Vernetzer | Methacrylsäure |
| 1 | 73 Tl | 23,5 Tl | 2 Tl DCPA | 1,5 Tl |
| 2 | 73 Tl | 23,5 Tl | 2 Tl DVB | 1,5 Tl |
| DCPA = Acrylsäureester des Tricyclodecenylalkohols | | | | |
| DVB = Divinylbenzol | | | | |

**Tabelle 2:**

| Optische und mechanische Eigenschaften der mattierten Formteile | | | | |
|---|---|---|---|---|
| Nr. | Schlagzähigkeit [kJ/m2] | E-Modul [Nmm2] | Glanz | Transparenz [%] |
| 1 | 14 | 3600 | matt | 87 |
| 2 | 12 | 3700 | matt | 87 |
| V1) | 15 | 3600 | glänzend | 88 |
| V2) | 16 | 3200 | matt | 0 |
| V1) Vergleichsversuch ohne Polymerisat nach Anspruch (1) | | | | |
| V2) Vergleichsversuch bei Einsatz von Mattierungsmittel nach EP 450 511 | | | | |

## Patentansprüche

1. Thermoplastische Formmasse, im wesentlichen aus 1 Gew.-% bis 50 Gew.-%, eines teilchenförmigen Polymerisates A mit einer mittleren Teilchengröße unter 1000 nm, bestehend aus
a1: bis zu 99,8 Gew.-% mindestens eines vinylaromatischen Monomeren a1,
a2: bis zu 99,8 Gew.-% mindestens eines Methacrylsäurealkylesters a2 mit 1 bis 8 Kohlenstoffatomen im Alkylrest,
a3: bis zu 50 Gew.-% mindestens eines polaren, copolymerisierbaren, ethylenisch ungesättigten Monomeren a3,
a4: 0,1 bis 10 Gew.-% mindestens eines polyfunktionellen, vernetzend wirkenden Monomeren a4,
a5: 0,1 bis 15 Gew.-% mindestens eines eine oder mehrere saure, basische oder Epoxy-Gruppen enthaltenden Monomeren a5,
wobei die Summe der Bestandteile a1, a2 und a3 75 Gew.-% bis 99,8 Gew.-%, bezogen auf A, beträgt und die Summe aus a1, a2, a3, a4 und a5 100 Gew.-% bezogen auf A beträgt, und 50 Gew.-% bis 99 Gew.-% mindestens eines Thermoplasts mit einer Glasübergangstemperatur von mehr als 25°C, ausgewählt aus Polyvinylchlorid, Polymethylmethacrylat, Polystyrol, sowie Copolymere aus einem vinylaromatischen Monomeren und einem polaren, copolymerisierbaren, ethylenisch ungesättigten Monomeren, wobei die Differenz zwischen dem Brechungsindex des Polymerisats A und dem des Thermoplast kleiner als 0,2 ist, sowie gegebenenfalls untergeordnete Mengen an üblichen Zusatz- und Hilfsstoffen.

2. Thermoplastische Formmasse nach Anspruch 1, in der das Polymerisat A durch Emulsionspolymerisation hergestellt wird.

3. Thermoplastische Formmasse nach den Ansprüchen 1 bis 2, in denen der Thermoplast, Copolymer aus einem vinylaromatischen Monomeren und einem polaren, copolymerisierbaren, ethylenisch ungesättigten Moncmeren, Styrol-Acrylnitril-Copolymere, und/oder α-Methylstyrol-Acrylnitril-Copolymere, sind.

4. Thermoplastische Formmasse nach den Ansprüchen 1 bis 3, in der die Differenz zwischen dem Berechnungsindex des Polymerisates A und dem des Thermoplast kleiner als 0,02 ist.

## Claims

1. A thermoplastic molding material essentially comprising from 1 to 50% by weight of a particulate polymer A having a mean particle size of less than 1000 nm and consisting of
a1: up to 99.8% by weight of at least one vinylaromatic monomer al,
a2: up to 99.8% by weight of at least one alkyl methacrylate a2 where the alkyl radical is of 1 to 8 carbon atoms,
a3: up to 50% by weight of at least one polar, copolymerizable, ethylenically unsaturated monomer a3,
a4: from 0.1 to 10% by weight of at least one polyfunctional, crosslinking monomer a4 and
a5: from 0.1 to 15% by weight of at least one monomer a5 containing one or more acidic, basic or epoxy groups,
the sum of the components a1, a2 and a3 being from 75 to 99.8% by weight, based on A, and the sum of a1, a2, a3, a4 and a5 being 100% by weight, based on A, and from 50 to 99% by weight of at least one thermoplastic having a glass transition temperature of more than 25°C, selected from polyvinyl chloride, polymethyl methacrylate, polystyrene and copolymers of a vinylaromatic monomer and a polar, copolymerizable ethylenically unsaturated monomer, the difference between the refractive index of the polymer A and that of the thermoplastic being less than 0.2 and, if required, minor amounts of conventional additives and assistants.

2. A thermoplastic molding material as claimed in claim 1, in which the polymer A is prepared by emulsion polymerization.

3. A thermoplastic molding material as claimed in claim 1 or 2, in which the thermoplastic is a copolymer of a vinylaromatic monomer and a polar, copolymerizable, ethylenically unsaturated monomer, a styrene/acrylonitrile copolymer and/or an a-methylstyrene/acrylonitrile copolymer.

4. A thermoplastic molding material as claimed in any of claims 1 to 3, in which the difference between the refractive index of the polymer A and that of the thermoplastic is less than 0.02.

## Revendications

1. Masse à mouler thermoplastique, formée essentiellement de 1% en poids à 50% en poids d'un polymère sous forme particulaire d'un calibre moyen des particules inférieur à 1000 nm, qui se compose de
a1 : jusqu'à 99,8% en poids d'au moins un monomère vinyle aromatique a1,
a2: jusqu'à 99,8% en poids d'au moins un méthacrylate d'alkyle a2 dont le radical alkyle comporte de 1 à 8 atomes de carbone,
a3: jusqu'à 50% en poids d'au moins un monomère éthyléniquement insaturé, copolymérisable et polaire a3,
a4: 0,1 à 10% en poids d'au moins un monomère à activité réticulante, polyfonctionnel a4,
a5 : 0,1 à 15% en poids d'au moins un ou plusieurs monomères contenant des radicaux époxy, basiques ou acides a5,
où la somme des constituants a1, a2 et a3 atteint 75% en poids à 99,8% en poids, par rapport à A, et la somme de a1, a2, a3, a4 et a5 représente 100% en poids, par rapport à A, et 50% en poids à 99% en poids d'au moins un thermoplaste d'une température de transition vitreuse supérieure à 25°C, choisi parmi le poly(chlorure de vinyle), le poly(méthacrylate de méthyle), le polystyrène, ainsi que des copolymères d'un monomère vinyle aromatique et d'un monomère éthyléniquement insaturé, copolymérisable et polaire, où la différence entre l'indice de réfraction du polymère A et celui du thermoplaste est inférieure à 0,2, ainsi qu'éventuellement des quantités mineures d'additifs et d'adjuvants usuels.

2. Masse à mouler thermoplastique suivant la revendication 1, dans laquelle le polymère A a été préparé par polymérisation en émulsion.

3. Masse thermoplastique suivant les revendications 1 et 2, dans laquelle le thermoplaste est un copolymère d'un monomère vinyle aromatique et d'un monomère éthyléniquement insaturé copolymérisable et polaire, ou est constitué de copolymères du styrène et de l'acrylonitrile et/ou de copolymères de l'α-méthylstyrène et de l'acrylonitrile.

4. Masse thermoplastique suivant les revendications 1 à 3, dans laquelle la différence entre l'indice de réfraction du polymère A et celui du thermoplaste est inférieure à 0,02.
